# EUROPÄISCHE PATENTSCHRIFT

(11) **EP 0 475 092 B1**
(45) Veröffentlichungstag und Bekanntmachung des Hinweises auf die Patenterteilung: **31.05.1995**
(21) Anmeldenummer: 91113515.0
(22) Anmeldetag: 12.08.1991
(51) Int. Cl.: H01G 9/10

(54) **Elektrolytkondensator**
Electrolytic capacitor
Condensateur électrolytique

(30) Priorität: 10.09.1990 DE 9012891 U
(43) Veröffentlichungstag der Anmeldung: 18.03.1992
(73) Patentinhaber: SIEMENS AKTIENGESELLSCHAFT, 80333 München (DE)
(72) Erfinder: Aigle, Karl, Dipl.-Ing. (FH), W-7920 Heidenheim (DE)

(56) Entgegenhaltungen:
- DE-A- 2 014 451
- DE-A- 3 319 373

## Beschreibung

Die Erfindung betrifft einen Elektrolytkondensator nach dem Oberbegriff des Patentanspruchs.

Ein derartiger Kondensator ist aus der DE-A-20 14 451 bekannt.

Elektrolytkondensatoren werden üblicherweise in Metallgehäuse, vorzugsweise Aluminiumbecher eingebaut, die mit einer Abschlußscheibe verschlossen werden. In der Abschlußscheibe befinden sich Durchführungen bzw. Anschlußelemente. Die Kosten für den Einbau können hierbei allerdings bis zu 40% der Gesamtkosten des Elektrolytkondensators betragen, so daß ein Bedarf nach einem kostengünstigeren Einbau besteht.

Aus der DE-AS 1208818 ist es bekannt, Elektrolytkondensatoren in ein Metallgehäuse einzubauen, das einen Kunststoffabschluß besitzt. Hierbei besteht jedoch die Schwierigkeit, daß Metall und Kunststoff unterschiedliche Ausdehnungskoeffizienten besitzen, so daß durch Temperatureinwirkungen Risse an der Verbindungsstelle Metall/Kunststoff auftreten können. Als Folge davon kann flüssiger Betriebselektrolyt aus dem Kondensatorgehäuse entweichen, was unerwünscht ist, da diese Elektrolyte stark korrodierende Einflüsse auf verschiedene Materialien besitzen. Es ist zwar möglich, die Haftfähigkeit zwischen Metall und Kunststoff dadurch zu verbessern, indem das Gehäuse im Bereich des Abschlusses entweder aufgerauht oder mit einem Haftvermittler beschichtet ist, jedoch besteht auch bei diesen Maßnahmen die Gefahr, daß durch Unachtsamkeit beim Einbau Elektrolyt an die mit Kunststoff zu beschichtenden Stellen gelangt, was eine Verschlechterung der Haftfestigkeit zur Folge hat.

Zur Behebung der vorstehend aufgezeigten Schwierigkeiten ist es aus der DE-OS 3630815 bekannt, daß der Kunststoffabschluß den äußeren Gehäuserand umgreift. Die Herstellung eines derartigen Kunststoffabschlusses erfordert komplizierte Verfahrensschritte, wodurch die Herstellungskosten des Kondensators in die Höhe getrieben werden.

Aufgabe der vorliegenden Erfindung ist es, einen in ein Gehäuse eingebauten Elektrolyt-Kondensator anzugeben, bei dem in einfacher Weise eine feuchtesichere Abdichtung zwischen Kondensatorwickel und Außenraum sowie ein sicherer Halt eines Anschlußkabels gewährleistet sind.

Diese Aufgabe wird durch die im Patentanspruch angegebenen Maßnahmen gelöst.

Der Gegenstand der Neuerung wird anhand des folgenden Ausführungsbeispiels erläutert.

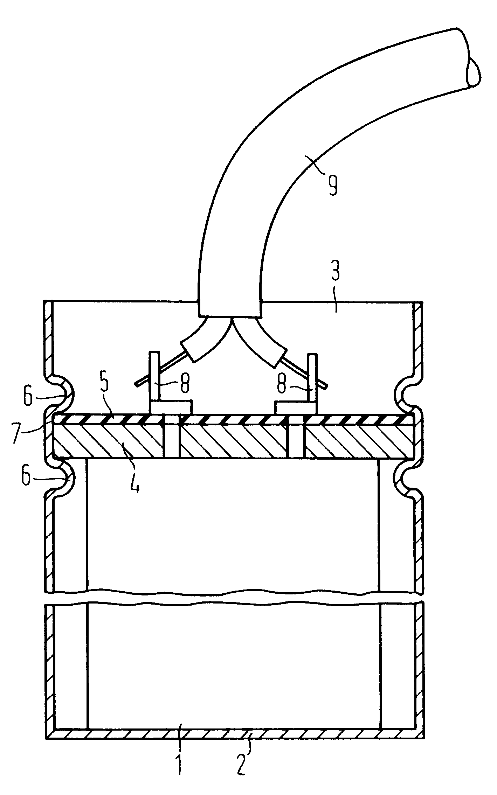

In der dazugehörigen Zeichnung mit einer einzigen Figur ist ein Kondensatorwickel 1 dargestellt, der in ein Metallgehäuse 2 eingebaut ist. Das Metallgehäuse 2 besteht vorzugsweise aus einem Aluminiumbecher.

Das Gehäuse 2 ist an seinem oberen Ende durch einen Kunststoffabschluß 3 verschlossen, der beispielsweise aus einem Epoxidharzverguß bestehen kann. Zwischen Kondensatorwickel 1 und Kunststoffabschluß 3 ist eine Abschlußscheibe 4 angeordnet, die an ihrer Oberseite eine Gummikaschierung 5 besitzt. Die Abschlußscheibe 4 ist mittels einer im Gehäuse 2 angeordneten Doppelsicke 6 fixiert. Hierdurch entsteht an der Stelle 7 ein feuchtedichter Abschluß zwischen der Sicke 6 und der Gummierung 5 der Abschlußscheibe 4.

In der Abschlußscheibe 4 sind Durchführungen 8 angeordnet, die in bekannter Weise mit den Anschlüssen des Kondensatorwickels 1 verbunden sind. An den Anschlüssen 8 ist ein Anschlußkabel 9 derart ankontaktiert, daß die Enden des Kabels 9 durch den Kunststoffverguß 3 festgelegt werden.

Der Verguß 3 übt somit gleichzeitig die Funktionen des Feuchteschutzes und Halts für das Anschlußkabel 9 aus.

Das obere Ende des Gehäuses 2 ist derart verlängert, daß durch den Kunststoffabschluß 3 die geforderten Funktionen des Feuchteschutzes und Halts für das Anschlußkabel 9 in ordnungsgemäßer Weise gewährleistet werden.

## Patentansprüche

1. Elektrolytkondensator mit einem Kondensatorwickel (1), der in ein Metallgehäuse (2) eingebaut ist, das eine Dichtung aufweist, die eine Abschlußscheibe (4) und einen darüber angeordneten Gummieinsatz (5) enthält und bei dem in Abschlußscheibe (4) und Gummieinsatz (5) Durchführungen (8) angeordnet sind, die mit den Anschlüssen des Kondensatorwickels (1) verbunden sind,
**dadurch gekennzeichnet**,
daß der Gummieinsatz (5) auf die Abschlußscheibe (4) aufkaschiert ist, daß die Abschlußscheibe (4) mit der Gummikaschierung (5) durch eine im Metallgehäuse (2) angeordnete Doppelsicke (6) derart festgelegt ist, daß an einer Stelle (7) des Gehäuses (2) ein feuchtedichter Abschluß zwischen der einen Sicke und der Gummikaschierung (5) entsteht, daß das obere Ende des Gehäuses (2) verlängert ist, und daß in diesem Bereich ein Kunststoffabschluß (3) angeordnet ist, der die Enden eines mit den Durchführungen (8) verbundenen Anschlußkabels (9) festlegt.

## Claims

1. Electrolytic capacitor having a capacitor winding (1) which is installed in a metal housing (2) which has a seal which contains an end disc (4) and a rubber insert (5) arranged above it, and in the case of which capacitor bushings (8) are arranged in the end disc (5) and rubber insert (5), which bushings (8) are connected to the connections of the capacitor winding (1), characterized in that the rubber insert (5) is coated onto the end disc (4), in that the end disc (4) is fixed to the rubber coating (5) by means of a double bead (6), which is arranged in the metal housing (2), in such a manner that a moisture-tight closure is produced between one bead and the rubber coating (5) at a point (7) on the housing (2), in that the upper end of the housing (2) is extended, and in that a plastic closure (3) is arranged in this region, which plastic closure (3) fixes the ends of a connecting cable (9) which is connected to the bushings (8).

## Revendications

1. Condensateur électrolytique comportant un enroulement (1), qui est inséré dans un boîtier métallique (2) possèdant une garniture d'étanchéité qui comporte un disque de fermeture (4) et un insert en caoutchouc (5) disposé au-dessus de ce disque, et dans lequel, dans le disque de fermeture (4) et dans l'insert en caoutchouc (5), sont disposées des traversées (8), qui sont reliées aux bornes de l'enroulement (1) du condensateur,
caractérisé par le fait
que l'insert en caoutchouc (5) est disposé en tant que doublage sur le disque de fermeture (4), que le disque de fermeture (4) pourvu du doublage en caoutchouc (5) est fixé au moyen d'une moulure double (6) présente sur le boîtier métallique (2) de telle sorte, qu'il se forme, en un emplacement (7) du boîtier (2), une fermeture étanche à l'humidité entre la moulure et le doublage de caoutchouc (5), que l'extrémité supérieure du boîtier (2) est prolongée et que dans cette zone est prévu un élément de fermeture en matière plastique (3), qui fixe les extrémités d'un câble de raccordement (9) relié aux traversées (8).
